# EUROPEAN PATENT APPLICATION

(11) **EP 4 324 873 A1**
(43) Date of publication of application: **21.02.2024**
(21) Application number: 22815574.3
(22) Date of filing: 18.02.2022
(51) Int. Cl.: C08J 11/10, B01D 17/025

(54) **SEPARATION SYSTEM AND SEPARATION METHOD**

(30) Priority: 31.05.2021 JP 2021091776
(71) Applicant: Mitsubishi Heavy Industries, Ltd., Tokyo 100-8332 (JP)
(72) Inventor: MATSUBARA, Wataru, Tokyo 100-8332 (JP); GENTA, Minoru, Tokyo 100-8332 (JP); SEIKI, Yoshio, Tokyo 100-8332 (JP); HORIZOE, Kouji, Tokyo 100-8332 (JP)
(74) Representative: Müller Schupfner & Partner Patent- und Rechtsanwaltspartnerschaft mbB
(86) International application number: PCT/JP2022/006714
(87) International publication number: WO 2022/254815

(57) **Abstract**

According to the present invention, PET and foreign matter are appropriately separated. A separation system comprises: a storage part that stores a solution containing a PET solution obtained by dissolving polyethylene terephthalate in a carboxylic acid-derived monomer, and impurities which are components other than polyethylene terephthalate, and that separates the solution into the PET solution and the impurities through gravity; a discharge part for discharging the separated impurities from the storage part; and a reaction part in which the separated PET solution and a reaction solvent, which reacts with the polyethylene terephthalate, are introduced to depolymerize the polyethylene terephthalate in the PET solution.

## Description

### Field

The present disclosure relates to a separation system and a separation method.

### Background

Techniques for separating impurities from polyester, for example, to recycle polyester have been known. Patent Literature 1 discloses that polyethylene terephthalate (PET) waste is fed into ethylene glycol (EG) for depolymerization to obtain bis(β-hydroxyethyl) terephthalate (BHET), and that foreign matter other than PET is removed by a filtering machine during or after the depolymerization reaction.

### Citation List

### Patent Literature

Patent Literature 1: Japanese Patent No. 4065659 Summary

### Technical Problem

Unfortunately, foreign matter other than PET may be present as a high-viscosity melt. As a result, the melted foreign matter may block the filter openings of the filtering machine, and the foreign matter may fail to be properly recovered and separated.

The present disclosure is made to solve the aforementioned problem and an object of the present disclosure is to provide a separation system and a separation method that can properly separate PET and foreign matter.

### Solution to Problem

To solve the aforementioned problem and achieve the object, a separation system according to the present disclosure includes: a storage unit configured to store therein a dissolved solution containing a PET solution in which polyethylene terephthalate is dissolved in a carboxylic acid-derived monomer and an impurity that is a component other than the polyethylene terephthalate, and separate the dissolved solution into the PET solution and the impurity by gravity; a discharge unit configured to discharge the separated impurity from an inside of the storage unit; and a reaction unit into which the separated PET solution and a reaction solvent reactive with polyethylene terephthalate are introduced and in which polyethylene terephthalate in the PET solution is depolymerized.

To solve the aforementioned problem and achieve the object, a separation method according to the present disclosure includes the steps of: separating a dissolved solution containing a PET solution in which polyethylene terephthalate is dissolved in a carboxylic acid-derived monomer and an impurity that is a component other than the polyethylene terephthalate, into the PET solution and the impurity by gravity; discharging the separated impurity; and reacting the separated PET solution with a reaction solvent reactive with polyethylene terephthalate to depolymerize polyethylene terephthalate in the PET solution.

### Advantageous Effects of Invention

According to the present disclosure, PET and foreign matter can be properly separated.

### Brief Description of Drawings

FIG. 1 is a schematic diagram of a polyethylene terephthalate recycling process in the present embodiment.
FIG. 2 is a schematic diagram of a separation system according to a first embodiment.
FIG. 3 is a flowchart illustrating an operation flow of the separation system.
FIG. 4 is a schematic diagram of another example of a reaction unit.
FIG. 5 is a partial schematic diagram of a separation system according to a second embodiment.

### Description of Embodiments

Preferred embodiments of the present invention will be described in detail below with reference to the accompanying drawings. The present invention is not limited by the embodiments, and if there are a plurality of embodiments, a configuration in which the embodiments are combined is embraced here.

### First Embodiment

### Recycling Process

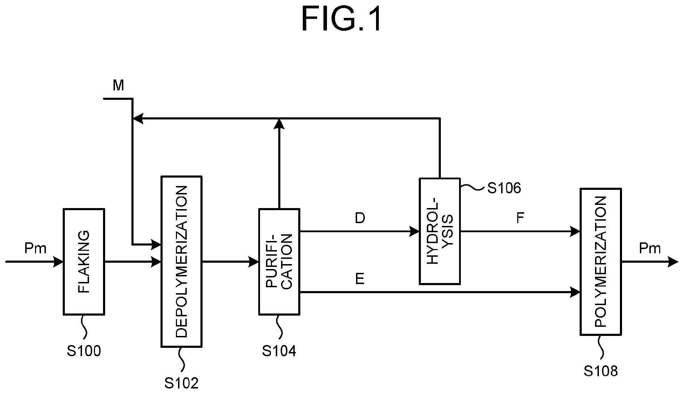

FIG. 1 is a schematic diagram of a polyethylene terephthalate recycling process in the present embodiment. In the present embodiment, a process of recycling (regenerating) a polyethylene terephthalate (PET) raw material Pm is performed by depolymerizing the PET raw material Pm into monomers and polymerizing the monomers again. Specifically, as illustrated in FIG. 1, the PET raw material Pm is regenerated by flaking the PET raw material Pm (step S100), mixing the flaked PET raw material Pm with a reaction solvent M to depolymerize the PET raw material Pm (step S102), purifying (separating) the monomers of the depolymerized polyester to extract a carboxylic acid-derived monomer D and a monomer E of an alcohol component (step S104), hydrolyzing the monomer D to separate the reaction solvent M (step S106), and polymerizing a monomer F produced by hydrolyzing the monomer D with the monomer E (step S108). The recycling process employing a separation system 1 of the present embodiment may perform only the processes of recovering the monomers D and E at step S102 and step S104, and the monomer F at step S106, without performing the process up to polymerizing again at step S108.

### PET Raw Material

The PET raw material Pm to be depolymerized in the present embodiment is a substance containing polyethylene terephthalate (PET). The PET raw material Pm is not limited to those containing only PET components but also includes components other than PET components. Examples of the components other than PET contained in the PET raw material Pm include plastics such as polyethylene other than PET, polystyrene, polypropylene, and polyvinyl chloride, metals, pigments, and polymerization catalysts. Hereinafter, the components other than PET contained in the PET raw material Pm will be referred to as impurities R.

### Reaction Solvent

The reaction solvent M is a solvent that reacts with PET to depolymerize PET. The reaction solvent M may be, for example, at least one of methanol, ethanol, water, and ethylene glycol.

### Monomer of Carboxylic Acid

The carboxylic acid-derived monomer D is a monomer having a carboxyl group that is produced by a depolymerization reaction of PET. The monomer D may be, for example, dimethyl carboxylate or diethyl carboxylate. More specifically, the monomer D is preferably a monomer of terephthalic acid and may be, for example, dimethyl terephthalate (DMT).

### Monomer of Alcohol

The monomer E of an alcohol component is a monomer of an alcohol component that is produced by a depolymerization reaction of PET. The monomer E may be, for example, a dihydroxy compound (divalent alcohol) and more specifically may be ethylene glycol (EG).

In the following, a case where the reaction solvent M is methanol, the monomer D is DMT, and the monomer E is EG will be taken as an example.

### Separation System

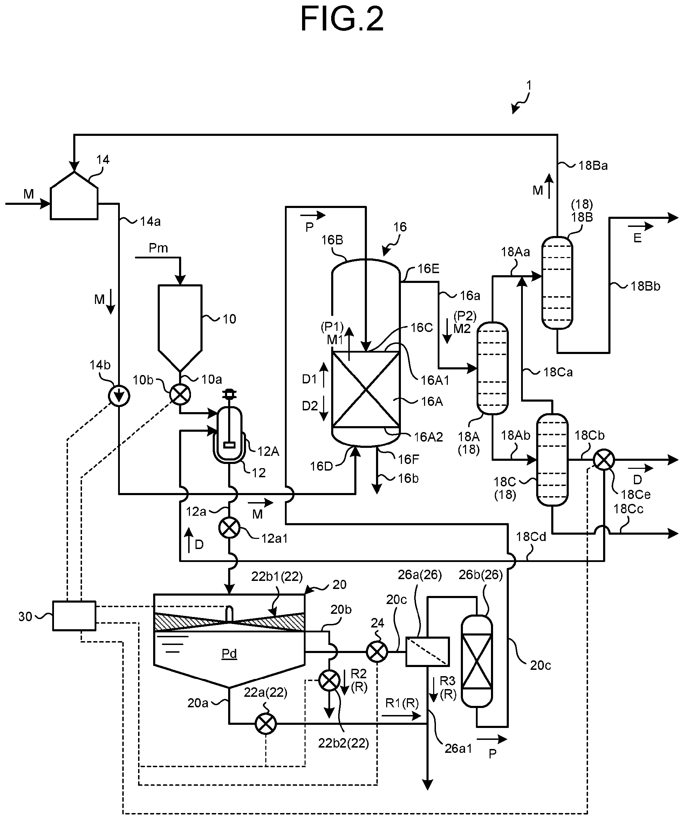

FIG. 2 is a schematic diagram of a separation system according to a first embodiment. The separation system 1 according to the first embodiment is a system for monomerizing a polyester contained in the PET raw material Pm to produce the monomers D and E. As illustrated in FIG. 1, the separation system 1 includes a raw material storage unit 10, a dissolution unit 12, a solvent storage unit 14, a reaction unit 16, a separation unit 18, a storage unit 20, a removal unit 26, and a control unit 30.

### Raw Material Storage Unit

The raw material storage unit 10 is a basin (hopper) into which the PET raw material Pm is introduced and the PET raw material Pm is stored. In the present embodiment, the flaked PET raw material Pm is stored in the raw material storage unit 10, but the PET raw material Pm may have any shape and size. The raw material storage unit 10 is connected to the dissolution unit 12 via an introduction pipe 10a. The PET raw material Pm in the raw material storage unit 10 is supplied to the dissolution unit 12 through the introduction pipe 10a. The introduction pipe 10a is provided with a regulator 10b that regulates the amount of the PET raw material Pm supplied from the raw material storage unit 10 to the dissolution unit 12. The regulator 10b is, for example, an open/close valve that supplies the PET raw material Pm in the raw material storage unit 10 to the dissolution unit 12, in the open state, and stops the supply of the PET raw material Pm in the raw material storage unit 10 to the dissolution unit 12, in the closed state. However, the regulator 10b is not limited to an open/close valve and may be any mechanism that can regulate the supply of the PET raw material Pm to the dissolution unit 12.

### Dissolution Unit

The dissolution unit 12 is a basin in which a dissolved solution Pd is stored. The dissolved solution Pd is a solution produced by mixing the PET raw material Pm and the monomer D. Here, the PET component contained in the PET raw material Pm dissolves in the monomer D, but the impurities R, which are components other than PET contained in the PET raw material Pm, remain without dissolving in the monomer D. It therefore can be said that the dissolved solution Pd contains a PET solution P in which PET contained in the PET raw material Pm is dissolved in the monomer D, and the impurities R contained in the PET raw material Pm.

The monomer D and the PET raw material Pm are supplied to the dissolution unit 12. In the dissolution unit 12, PET contained in the PET raw material Pm dissolves in the monomer D while the impurities R remain without dissolving in the monomer D, resulting in the dissolved solution Pd containing the PET solution P and the impurities R. Dissolving PET in the monomer D in this manner can reduce viscosity and improve fluidity, so that PET can be easily led to the reaction unit 16. In the PET solution P, the entire amount of the PET is not necessarily dissolved in the monomer D, and PET may be at least partially undissolved in the monomer D. When the components other than PET contained in the PET raw material Pm include a component soluble in the monomer D, the PET solution P may contain the component dissolved in the monomer D.

In the present embodiment, the dissolution unit 12 is provided with a heater 12A. The heater 12A heats the inside of the dissolution unit 12 to heat the monomer D and the PET raw material Pm supplied to the dissolution unit 12 to a predetermined temperature. The predetermined temperature is a temperature at which PET can dissolve in the monomer D. By heating at a predetermined temperature in this way, PET contained in the PET raw material Pm can be properly dissolved in the monomer D. The predetermined temperature is preferably 140°C or higher and 300°C or lower, more preferably 160°C or higher and 280°C or lower, and even more preferably 190°C or higher and 250°C or lower. The impurities R contain a component that melts when heated to a predetermined temperature (the temperature at which PET can dissolve in the monomer D). The impurities R therefore are contained in the dissolved solution Pd such that they are at least partially melted. In the present embodiment, the heater 12A is provided in, but not limited to, the dissolution unit 12, but the heater 12A may be provided at any location.

### Storage Unit

The storage unit 20 is a basin in which the dissolved solution Pd is stored. The storage unit 20 is connected to the dissolution unit 12 via an introduction pipe 12a. The dissolved solution Pd in the dissolution unit 12 is supplied to the storage unit 20 through the introduction pipe 12a. The introduction pipe 12a is provided with a regulator 12a1 that regulates the amount of the PET raw material Pm supplied from the dissolution unit 12 to the storage unit 20. The regulator 12a1 is, for example, an open/close valve that supplies the dissolved solution Pd in the dissolution unit 12 to the storage unit 20, in the open state, and stops the supply of the dissolved solution Pd in the dissolution unit 12 to the storage unit 20, in the closed state. However, the regulator 12a1 is not limited to an open/close valve and may be any mechanism that can regulate the supply of the dissolved solution Pd to the storage unit 20.

In the storage unit 20, the dissolved solution Pd is separated by gravity into the PET solution P and the impurities R. In the present embodiment, the dissolved solution Pd stored in the storage unit 20 is allowed to stand still and thereby separated by gravity into the PET solution P and the impurities R.

In the present embodiment, the dissolved solution Pd stored in the storage unit 20 is separated by gravity into a layer of a first impurity R1, a layer of the PET solution P, and a layer of a second impurity R2. The layer of the first impurity R1 is formed vertically below the layer of the PET solution P. In other words, among the impurities R, the first impurity R1 is the one not dissolved in the monomer D and has a greater specific gravity than that of the PET solution P. The first impurity R1 settles down in the PET solution P in the storage unit 20 to form a layer of the first impurity R1. On the other hand, the layer of the second impurity R2 is formed vertically above the layer of the PET solution P. In other words, among the impurities R, the second impurity R2 is the one not dissolved in the monomer D and has a smaller specific gravity than that of the PET solution P. The second impurity R2 floats in the PET solution P in the storage unit 20 to form a layer of the second impurity R2.

The dissolved solution Pd in the storage unit 20 is kept at a predetermined temperature (the temperature at which PET can dissolve in the monomer D) or higher. Among the impurities R, the first impurity R1 and the second impurity R2 are components that melt when heated to a predetermined temperature and thus exist in a melted state even in the storage unit 20. The first impurity R1 and the second impurity R2 are, for example, plastics other than PET (polyethylene other than PET, polystyrene, polypropylene, polyvinyl chloride, etc.).

In the present embodiment, the layer of the PET solution P contains a third impurity R3. Among the impurities R, the third impurity R3 is a component that does not dissolve in the monomer D and does not melt even at a predetermined temperature (the temperature at which PET can dissolve in the monomer D). In other words, the third impurity R3 is not separated from the PET solution P even by gravity separation and exists in the PET solution P in a not-melted solid state. In the present embodiment, the third impurity R3 is dispersed in the PET solution P. The third impurity R3 is, for example, metals, pigments, and polymerization catalysts.

A discharge pipe 20a is connected to the storage unit 20. The discharge pipe 20a is a pipe for discharging the first impurity R1 separated into the layer below the PET solution P from the storage unit 20. The discharge pipe 20a is connected to the location where the layer of the first impurity R1 is formed in the storage unit 20, and in the example of the present embodiment, is connected to the bottom of the storage unit 20. The discharge pipe 20a is provided with a first discharge unit 22a. The first discharge unit 22a is a mechanism that discharges the first impurity R1 in the storage unit 20 from the storage unit 20, and in the present embodiment, is a pump.

A discharge pipe 20b is connected to the storage unit 20. The discharge pipe 20b is a pipe for discharging the second impurity R2 separated into the layer above the PET solution P from the storage unit 20. The discharge pipe 20b is connected to the location where the layer of the second impurity R2 is formed in the storage unit 20, and is connected vertically above the discharge pipe 20a. Second discharge units 22b1 and 22b2 are attached to the storage unit 20 to discharge the second impurity R2 in the storage unit 20 from the storage unit 20. The second discharge unit 22b1 is a skimmer provided at the liquid surface of the PET solution P and recovers (scrapes off) the second impurity R2 floating on the liquid surface of the PET solution P. The second discharge unit 22b2 is a mechanism provided at the discharge pipe 20b to discharge the second impurity R2 recovered by the second discharge unit 22b1 via the discharge pipe 20b, and in the present embodiment, is a pump. In this way, in the example of the present embodiment, the second discharge units 22b1 and 22b2 are provided as a mechanism for discharging the second impurity R2. However, the configuration of the second discharge unit for discharging the second impurity R2 is not limited to this, and any configuration may be employed.

The first impurity R1 and the second impurity R2 separated from the PET solution P in the storage unit 20 are discharged to the outside of the storage unit 20 by the first discharge unit 22a and the second discharge units 22b1 and 22b2. The first impurity R1 and the second impurity R2 are thus removed from the PET solution P. Hereinafter, the first discharge unit 22a and the second discharge units 22b1 and 22b2 will be referred to as a discharge unit 22 when they are not distinguished from each other. In the description above, the impurities R include the first impurity R1 having a greater specific gravity than that of the PET solution P and the second impurity R2 having a smaller specific gravity than that of the PET solution P. However, the impurities R may include only one of the first impurity R1 and the second impurity R2.

An introduction pipe 20c is connected to the storage unit 20. The introduction pipe 20c is a pipe for leading the PET solution P separated from the impurities R from the storage unit 20. The introduction pipe 20c is connected to the location where the layer of the PET solution P is formed in the storage unit 20, and in the example of the present embodiment, is connected to a location between the discharge pipe 20a and the discharge pipe 20b in the vertical direction. The introduction pipe 20c is provided with an outlet unit 24. The outlet unit 24 is a mechanism that leads the PET solution P in the storage unit 20 from the storage unit 20, and is a pump in the present embodiment.

In the present embodiment, the dissolution unit 12 that produces the dissolved solution Pd and the storage unit 20 that separates the dissolved solution Pd by gravity are separate basins. However, the dissolution unit 12 and the storage unit 20 are not necessarily separate basins, and the dissolved solution Pd may be produced and separated by gravity in a single basin. In this case, it can be said that the storage unit 20 also functions as the dissolution unit 12.

### Removal Unit

The removal unit 26 is a mechanism that removes the third impurity R3 contained in the PET solution P from the PET solution P. The removal unit 26 is connected to the introduction pipe 20c. In the present embodiment, a first removal unit 26a and a second removal unit 26b are provided as the removal unit 26. The first removal unit 26a is a filtering machine and collects a solid component contained in the PET solution P. The second removal unit 26b is an adsorber and adsorbs a solid component contained in the PET solution P that is not collected by the first removal unit 26a. The second removal unit 26b filters the solid component contained in the PET solution P that is not collected by the first removal unit 26a, through a packed bed in a packed column. The second removal unit 26b may perform at least one of adsorption or filtration of the solid component.

The PET solution P led from the storage unit 20 to the introduction pipe 20c is introduced into the first removal unit 26a, and at least part of the third impurity R3 contained in the PET solution P is collected in the first removal unit 26a. The third impurity R3 collected by the first removal unit 26a is discharged to the outside through a discharge pipe 26a1 connected to the first removal unit 26a. In the example in FIG. 1, the discharge pipe 26a1 joins the discharge pipe 20a but may not necessarily join the discharge pipe 20a. The PET solution P from which at least part of the third impurity R3 has been removed by the first removal unit 26a is led from the first removal unit 26a and introduced into the second removal unit 26b. In the second removal unit 26b, the third impurity R3 remaining in the PET solution P is adsorbed or filtered in the second removal unit 26b and then removed from the PET solution P. The third impurity R3 adsorbed or filtered in the second removal unit 26b is, for example, a pigment or a polymerization catalyst. The PET solution P from which the third impurity R3 has been removed by the second removal unit 26b is led from the second removal unit 26b and introduced into the reaction unit 16 through the introduction pipe 20c.

In this way, in the present embodiment, the first removal unit 26a and the second removal unit 26b are provided as a mechanism for removing the third impurity R3 from the PET solution P. However, the configuration of the removal unit 26 for removing the third impurity R3 is not limited to this, and any configuration may be employed. Since the impurities R do not always include the third impurity R3, the removal unit 26 is not an essential component.

### Solvent Storage Unit

The solvent storage unit 14 is a basin into which the reaction solvent M is introduced and the reaction solvent M is stored. The solvent storage unit 14 is connected to the reaction unit 16 via an introduction pipe 14a. The reaction solvent M in the solvent storage unit 14 is supplied to the reaction unit 16 through the introduction pipe 14a. More specifically, the introduction pipe 14a is provided with a heater/booster 14b that pressurizes and heats the reaction solvent M. The heater/booster 14b pressurizes and heats the reaction solvent M to bring the reaction solvent M into a supercritical state or a subcritical state (pressurized gas or pressurized liquid). The reaction solvent M in a supercritical or subcritical state (pressurized gas or pressurized liquid) is supplied to the reaction unit 16.

### Reaction Unit

The reaction unit 16 is a vessel into which the PET solution P separated from the impurities R in the storage unit 20 and the reaction solvent M are introduced and in which PET in the PET solution P is depolymerized. The reaction unit 16 includes a first reaction unit 16A and a second reaction unit 16B.

### First Reaction Unit

The first reaction unit 16A is formed in the reaction unit 16. In the present embodiment, it can be said that the first reaction unit 16A is a section in which a packing material is packed in the reaction unit 16. In the first reaction unit 16A, known packing materials used in gas-liquid or liquid-liquid contactors can be used as the packing material. For example, those similar to packing materials used in a contactor that brings heavy oil and water into contact to extract active ingredients can be used. Examples of the packing material include pipes made of SUS and the like, Raschig rings, Berl saddles, and Tellerettes.

The introduction pipe 20c is connected to the first reaction unit 16A. More specifically, an introduction port 16C of the introduction pipe 20c, which is an opening through which the PET solution P from the storage unit 20 is introduced, is connected to the first reaction unit 16A. The introduction port 16C is connected to a surface 16A1 on a first reaction D1 side of the first reaction unit 16A. The introduction pipe 20c is connected to the surface 16A1 such that the introduction port 16C is open to a second direction D2 side opposite to the first direction D1. In this way, in the present embodiment, the introduction port 16C open to the second direction D2 side is connected to the surface 16A1 of the first reaction unit 16A, but the position of the introduction port 16C is not limited to this. For example, the introduction port 16C may not necessarily be directly connected to the first reaction unit 16A. The introduction port 16C open to the second direction D2 side may be connected on the first direction D1 side with respect to the surface 16A1 of the first reaction unit 16A in the reaction unit 16.

The introduction pipe 14a is connected to the reaction unit 16. More specifically, an introduction port 16D of the introduction pipe 14a, which is an opening through which the reaction solvent M from the solvent storage unit 14 is introduced, is connected to the reaction unit 16. The introduction port 16D is connected on the second direction D2 side with respect to a surface 16A2 on the second direction D2 side of the first reaction unit 16A. The introduction pipe 14a is connected on the second direction D2 side with respect to the surface 16A2 such that the introduction port 16D is open to the first direction D1 side or to the center from a side surface. In this way, in the present embodiment, the introduction port 16D open to the first direction D1 side or to the center from a side surface is connected on the second direction D2 side with respect to the surface 16A2 of the first reaction unit 16A, but the position of the introduction port 16D is not limited to this. For example, the introduction port 16D may be directly connected to the first reaction unit 16A or may be connected to the surface 16A2 of the first reaction unit 16A.

In this way, in the present embodiment, the introduction port 16C through which the PET solution P is introduced is open toward the second direction D2, and the introduction port 16D through which the reaction solvent M is introduced is open toward the first direction D1 or to the center from a side surface. The PET solution P and the reaction solvent M are therefore introduced into the first reaction unit 16A in directions facing each other.

The PET solution P introduced into the first reaction unit 16A through the introduction port 16C moves toward the second direction D2 on the surface of the packing material in the first reaction unit 16A. On the other hand, the reaction solvent M in a supercritical or subcritical state (pressurized gas or pressurized liquid) introduced through the introduction port 16D moves toward the first direction D1 in the first reaction unit 16A. In the first reaction unit 16A, the reaction solvent M in a supercritical or subcritical state (pressurized gas or pressurized liquid) comes into contact with the PET solution P. PET in the PET solution P is depolymerized (converted into a low molecular weight) by the reaction solvent M. The depolymerized PET is extracted into the reaction solvent M in a supercritical or subcritical state (pressurized gas or pressurized liquid). Hereinafter, the PET depolymerized in the first reaction unit 16A will be referred to as first depolymerized polyester P1, and the mixture of the first depolymerized polyester P1 and the reaction solvent M (reaction solvent M in which the first depolymerized polyester P1 is extracted) will be referred to as first solvent M1. The first solvent M1 containing the first depolymerized polyester P1 proceeds through the first reaction unit 16A to the first direction D1 side and is led to the first direction D1 side of the first reaction unit 16A.

The first depolymerized polyester P1 contains monomers D and E produced by the depolymerization of PET in the PET solution P, monomer D originally mixed in the PET solution P, and oligomers produced by the depolymerization of PET. As used herein, the oligomers are an oligomer derived from carboxylic acid and an oligomer of an alcohol component that are not monomerized but are depolymerized from PET (oligomer derived from carboxylic acid and oligomer of an alcohol component with a smaller molecular weight than that of PET).

### Second Reaction Unit

The second reaction unit 16B is formed in the reaction unit 16. The second reaction unit 16B is formed in a section where the first solvent M1 is led from the first reaction unit 16A. In the present embodiment, since the first solvent M1 is led to the first direction D1 side, it can be said that the second reaction unit 16B is a space formed on the first direction D1 side of the first reaction unit 16A.

In the second reaction unit 16B, the first depolymerized polyester P1 contained in the first solvent M1 is further depolymerized (converted into a low molecular weight) by the reaction solvent M contained in the first solvent M1. Hereinafter, the first depolymerized polyester P1 further depolymerized in the second reaction unit 16B will be referred to as second depolymerized polyester P2, and the mixture of the second depolymerized polyester P2 and the reaction solvent M (reaction solvent M in which the second depolymerized polyester PE is dissolved) will be referred to as second solvent M2. An outlet pipe 16a is connected to the second reaction unit 16B. More specifically, an outlet port 16E of the outlet pipe 16a, which is an opening through which the second solvent M2 from the second reaction unit 16B is led, is connected to the second reaction unit 16B. The second solvent M2 containing the second depolymerized polyester P2 in the second reaction unit 16B is led from the outlet port 16E to the outside of the second reaction unit 16B through the outlet pipe 16a.

The second depolymerized polyester P2 contains monomers D and E in the first depolymerized polyester P1, monomers D and E produced by the depolymerization of the oligomers in the first depolymerized polyester P1, and oligomers produced by the depolymerization of the first depolymerized polyester P1.

A discharge pipe 16b is connected to the bottom of the reaction unit 16. More specifically, a discharge port 16F of the discharge pipe 16b, which is an opening through which non-extractable components (described later) in the reaction unit 16 are discharged, is connected to the bottom of the reaction unit 16. The non-extractable components including impurities such as metal compounds not extracted into the reaction solvent M and residues of undecomposed polyester not extracted into the reaction solvent M are discharged from the discharge port 16F. In other words, the non-extractable components at the bottom of the reaction unit 16 are discharged from the discharge port 16F to the outside of the reaction unit 16 through the discharge pipe 16b. It can be said that the non-extractable components discharged from the discharge port 16F are components in the PET solution P that are not led to the separation unit 18 as the second solvent M2 (reaction solvent M in which the second depolymerized polyester P2 is dissolved) and remain in the first reaction unit 16A and the second reaction unit 16B.

The reaction unit 16 may be provided with a heater that heats the inside of the reaction unit 16 and a booster that maintains the pressure inside the reaction unit 16 at a predetermined value or higher. The temperature inside the reaction unit 16 is preferably 250°C or higher and 400°C or lower and more preferably 250°C or higher and 350°C or lower. The pressure inside the reaction unit 16 is preferably 1 MPa or higher and 30 MPa or lower and more preferably 6 MPa or higher and 25 MPa or lower. The booster and the heater may be controlled by the control unit 30.

### Separation Unit

In the separation unit 18, the second solvent M2 containing the second depolymerized polyester P2 is introduced, and the second solvent M2 is separated into the reaction solvent M, carboxylic acid-derived monomer D contained in the second depolymerized polyester P2, monomer E of an alcohol component contained in the second depolymerized polyester P2, and a residual substance. The residual substance is a component of the second solvent M2 other than the reaction solvent M, the monomer D, and the monomer E, and includes oligomers.

In the present embodiment, the separation unit 18 includes a first separation unit 18A, a second separation unit 18B, and a third separation unit 18C.

The first separation unit 18A is a separator connected to the outlet pipe 16a. The second solvent M2 containing the second depolymerized polyester P2 is introduced into the first separation unit 18A via the outlet pipe 16a. The first separation unit 18A separates the second solvent M2 into a low boiling point component and a high boiling point component with a higher boiling point than the low boiling point component. For example, in the first separation unit 18A, a component that is gas produced by setting the temperature of the second solvent M2 to a predetermined temperature may be the low boiling point component, and a liquid component may be the high boiling point component. Outlet pipes 18Aa and 18Ab are connected to the first separation unit 18A. The low boiling point component is led from the outlet pipe 18Aa, and the high boiling point component is led from the outlet pipe 18Ab.

The second separation unit 18B is a separator connected to the first separation unit 18A via the outlet pipe 18Aa. The low boiling point component is introduced into the second separation unit 18B via the outlet pipe 18Aa. The second separation unit 18B separates the low boiling point component into the reaction solvent M and the monomer E. Outlet pipes 18Ba and 18Bb are connected to the second separation unit 18B. The reaction solvent M is led from the outlet pipe 18Ba, and the monomer E is led from the outlet pipe 18Bb. The outlet pipe 18Ba is connected to the second separation unit 18B and the solvent storage unit 14. The reaction solvent M led from the second separation unit 18B is therefore returned to the solvent storage unit 14 and reused for monomerizing PET.

The third separation unit 18C is a separator connected to the first separation unit 18A via the outlet pipe 18Ab. The high boiling point component is introduced into the third separation unit 18C via the outlet pipe 18Ab. The third separation unit 18C separates the high boiling point component into a residual substance with an even higher boiling point, a low boiling point component containing the reaction solvent M and the monomer E, and the monomer D. Outlet pipes 18Ca, 18Cb, and 18Cc are connected to the third separation unit 18C. The outlet pipe 18Ca is connected to the second separation unit 18B. The low boiling point component separated in the third separation unit 18C is led to the second separation unit 18B via the outlet pipe 18Ca. The monomer D separated in the third separation unit 18C is led through the outlet pipe 18Cb, and the residual substance separated in the third separation unit 18C is led through the outlet pipe 18Cc.

An introduction pipe 18Cd is connected to the third separation unit 18C. The introduction pipe 18Cd is also connected to the dissolution unit 12 and introduces the monomer D led from the third separation unit 18C into the dissolution unit 12. In the example in FIG. 2, the introduction pipe 18Cd branches off from the outlet pipe 18Cb. The introduction pipe 18Cd is provided with a regulator 18Ce that regulates the amount of monomer D supplied from the third separation unit 18C to the dissolution unit 12. The regulator 18Ce is, for example, an open/close valve that supplies the monomer D to the dissolution unit 12, in the open state, and stops the supply of the monomer D to the dissolution unit 12, in the closed state. However, the regulator 18Ce is not limited to an open/close valve and may be any mechanism that can regulate the supply of the monomer D to the dissolution unit 12. In the present embodiment, the regulator 18Ce is provided at the branch section of the introduction pipe 18Cd from the outlet pipe 18Cb. However, the regulator 18Ce may be provided at any location. The introduction pipe 18Cd may not necessarily be connected to the outlet pipe 18Cb and may be directly connected to the third separation unit 18C. For example, a storage unit (basin) for storing the monomer D may be provided at the outlet pipe 18Cb, and the introduction pipe 18Cd may be connected to the storage unit.

The outlet pipe 18Cc may be connected to the dissolution unit 12 to introduce at least part of the residual substance into the dissolution unit 12. By introducing the residual substance into the dissolution unit 12, the oligomers contained in the residual substance can be depolymerized again in the reaction unit 16, thereby improving the monomer yields.

### Control Unit

The control unit 30 is a control device that controls the separation system 1. The control unit 30 controls the regulator 10b to control the amount of the polyester raw material PE supplied from the raw material storage unit 10 to the dissolution unit 12. The control unit 30 controls the regulator 12a1 to control the amount of the dissolved solution Pd supplied from the dissolution unit 12 to the storage unit 20. The control unit 30 controls the discharge unit 22 to discharge the impurities R separated from the PET solution P in the storage unit 20 from the storage unit 20. The control unit 30 controls the outlet unit 24 to lead the PET solution P separated from the impurities R in the storage unit 20 from the storage unit 20 and control the amount of the PET solution P introduced into the reaction unit 16. The control unit 30 controls the heater/booster 14b to bring the reaction solvent M into a supercritical or subcritical state (pressurized gas or pressurized liquid) and control the amount of the reaction solvent M in the supercritical or subcritical state (pressurized gas or pressurized liquid) supplied to the reaction unit 16. The control unit 30 controls the regulator 18Ce to control the amount of the monomer D supplied to the dissolution unit 12.

The control unit 30 is a computer in the present embodiment and includes, for example, a processor including an arithmetic circuit such as a central processing unit (CPU) and a memory that stores therein various information such as the contents of operations by the processor and programs. The control unit 30 executes control of the separation system 1 by reading programs from the memory.

The separation system 1, however, may not necessarily be automatically controlled by the control unit 30. For example, at least some of the processes may be controlled by the operation of a worker.

### Operation of Separation System

The operation of the separation system 1 will now be described. The control unit 30 controls the regulators 10b and 18Ce to introduce the PET raw material Pm and the monomer D into the dissolution unit 12 and mix the PET raw material Pm and the monomer D in the dissolution unit 12 to produce the dissolved solution Pd. The control unit 30 controls the regulator 12a1 to introduce the dissolved solution Pd produced in the dissolution unit 12 into the storage unit 20. The dissolved solution Pd introduced into the storage unit 20 is allowed to stand still for a predetermined time period and thereby separated by gravity into a layer of the first impurity R1, a layer of the PET solution P, and a layer of the second impurity R2. The dissolved solution Pd may be allowed to stand still by any method. For example, the control unit 30 may stop the discharge unit 22 and the outlet unit 24 to allow the dissolved solution Pd to stand still.

The control unit 30 controls the discharge unit 22 to discharge the first impurity R1 and the second impurity R2 in the storage unit 20 while controlling the outlet unit 24 to lead the PET solution P in the storage unit 20 from the storage unit 20. The PET solution P led from the storage unit 20 is introduced into the first reaction unit 16A after the third impurity R3 is removed by the removal unit 26. The control unit 30 controls the heater/booster 14b to supply the reaction solvent M brought into a supercritical or subcritical state (pressurized gas or pressurized liquid) to the reaction unit 16. The control unit 30 sets the reaction solvent M preferably to 250°C or higher and 400°C or lower and more preferably to 250°C or higher and 350°C or lower. The control unit 30 preferably sets the reaction solvent M to 1 MPa or higher and 30 MPa or lower and more preferably to 6 MPa or higher and 25 MPa or lower.

In this way, the PET solution P and the reaction solvent M are supplied to the reaction unit 16, and PET contained in the PET solution P is depolymerized in the first reaction unit 16A to produce the first depolymerized polyester P1. In the second reaction unit 16B, the first depolymerized polyester P1 is further depolymerized to produce the second solvent M2 which is a mixture of the second depolymerized polyester P2 and the reaction solvent M. The second solvent M2 is separated into the reaction solvent M, the monomer D, the monomer E, and the residual substance in the first separation unit 18A, the second separation unit 18B, and the third separation unit 18C. In this way, the monomers D and E are recovered from the polyester raw material PE and polymerized to regenerate the polyester raw material PE.

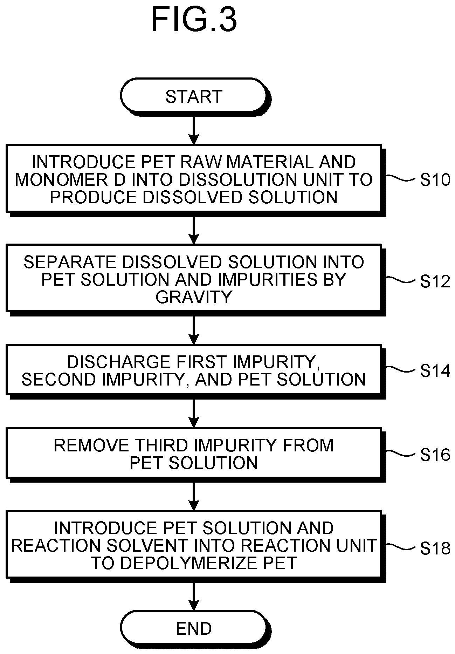

The flow of the operation of the separation system 1 described above will be described based on a flowchart. FIG. 3 is a flowchart illustrating an operation flow of the separation system. As illustrated in FIG. 3, the control unit 30 introduces the PET raw material Pm and the monomer D into the dissolution unit 12 to produce the dissolved solution Pd (step S10). The control unit 30 then supplies the dissolved solution Pd to the storage unit 20 to separate the dissolved solution Pd into the first impurity R1, the second impurity R2, and the PET solution P by gravity (step S12). The control unit 30 discharges the first impurity R1, the second impurity R2, and the PET solution P from the storage unit 20 (step S14) and allows the removal unit 26 to remove the third impurity R3 from the PET solution P (step S16). The control unit 30 then introduces the PET solution P and the reaction solvent M into the reaction unit 16 to depolymerize PET in the PET solution P (step S18).

### Effects

The PET raw material Pm may contain the impurities R other than PET, and the impurities R have to be removed in order to depolymerize PET for recycling. However, the impurities R may be present as a high-viscosity melt and therefore block the filter openings of the filtering machine, and the impurities R may fail to be properly recovered and separated. In contrast, in the present embodiment, the dissolved solution Pd is separated into the PET solution P and the impurities R by gravity separation. The impurities R separated by gravity are then discharged, and the PET solution P separated by gravity is used for depolymerization. This process enables proper recovery of the impurities R and proper separation into PET and foreign matter without blocking the filter openings of the filtering machine.

In the present embodiment, the PET solution P is depolymerized after the impurities R are separated by gravity. Depolymerization therefore can be performed with the increased purity of PET during the depolymerization, and the yields of the monomers D and E can be improved. The impurities R may contain a polymerization catalyst. The polymerization catalyst is a catalyst that promotes polymerization and may inhibit depolymerization. In contrast, in the present embodiment, since depolymerization is carried out after the polymerization catalyst is removed, the polymerization can be carried out properly, and the yields of the monomers D and E can be improved. Furthermore, when a catalyst for depolymerization is added in depolymerization, the amount of added catalyst for depolymerization can be reduced in accordance with removal of the polymerization catalyst.

### Other Configuration Examples

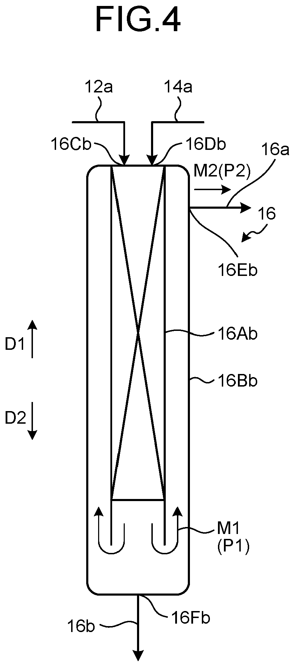

In the present embodiment, the PET solution P and the reaction solvent M are supplied in the first reaction unit 16A in directions facing each other. However, the embodiment is not limited to this, and they may be supplied in the same direction. FIG. 4 is a schematic diagram of another example of the reaction unit. In this case, for example, as illustrated in FIG. 4, the reaction unit 16 has a double-pipe structure, in which the inner tube portion may serve as a first reaction unit 16Ab and the outer tube portion may serve as a second reaction unit 16Bb. In this case, an introduction port 16Cb of the PET solution P and an introduction port 16Db of the reaction solvent M are open to the second direction D2 side and connected to the surface on the first direction D1 side of the first reaction unit 16Ab. The PET solution P and the reaction solvent M are therefore supplied to the second direction D2 side, that is, in the same direction. The PET solution P and the reaction solvent M proceed toward the second direction D2 side while reacting in the first reaction unit 16Ab, flow as the first solvent M1 (reaction solvent M into which the first depolymerized polyester P1 is extracted) into the second reaction unit 16Bb at the distal end of the first reaction unit 16Ab, continue to further react, and are led as the second solvent M2 (reaction solvent M containing the second depolymerized polyester P2) from an outlet port 16Eb open in the second reaction unit 16Bb. The non-extractable components are discharged from a discharge port 16Fb open at the bottom of the reaction unit 16.

The configuration of the reaction unit 16 for depolymerizing PET is not limited to that described above, and any configuration may be employed. For example, the reaction unit 16 may not necessarily be a two-stage configuration including the first reaction unit 16A and the second reaction unit 16B. The configuration of the separation unit 18 for separating the monomers D and E and the like is also not limited to that described above, and any configuration may be employed. In the description above, methanol is used as the reaction solvent M for the depolymerizing PET. However, the reaction solvent M is not limited to methanol and may be ethylene glycol or the like as described above.

### Second Embodiment

A second embodiment will now be described. The second embodiment differs from the first embodiment in that at least part of each of the first impurity R1 and the second impurity R2 is returned to the dissolved solution Pd. In the second embodiment, the sections having a configuration common to those in the first embodiment will not be further elaborated.

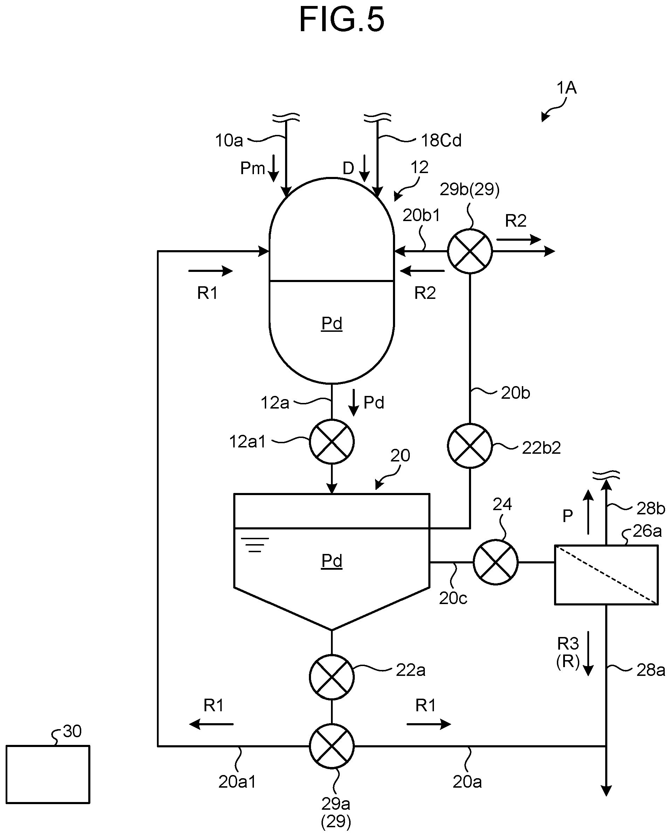

FIG. 5 is a partial schematic diagram of a separation system according to the second embodiment. As illustrated in FIG. 5, a separation system 1A according to the second embodiment includes an introduction unit 29 that introduces at least part of each of the first impurity R1 and the second impurity R2 into the dissolved solution Pd.

Specifically, the separation system 1A has an introduction pipe 20a1 that connects the storage unit 20 to the dissolution unit 12. The introduction pipe 20a1 is a pipe that branches off from the discharge pipe 20a and connects the discharge pipe 20a to the dissolution unit 12. The introduction pipe 20a1 is provided with an introduction unit 29a that regulates the amount of the first impurity R1 introduced from the storage unit 20 into the dissolution unit 12. The introduction unit 29a is, for example, an open/close valve that supplies the first impurity R1 to the dissolution unit 12, in the open state, and stops the supply of the first impurity R1 to the dissolution unit 12, in the closed state. However, the introduction unit 29a is not limited to an open/close valve and may be any mechanism that can regulate the supply of the first impurity R1 to the dissolution unit 12. In the example in FIG. 5, the introduction unit 29a is provided at the branch section of the introduction pipe 20a1 from the discharge pipe 20a. However, the introduction unit 29a may be provided at any location. The introduction pipe 20a1 may not necessarily branch off from the discharge pipe 20a and may be directly connected to the storage unit 20 and the dissolution unit 12.

In the separation system 1A, an introduction pipe 20b1 is provided to connect the storage unit 20 to the dissolution unit 12. The introduction pipe 20b1 is a pipe that branches off from the discharge pipe 20b and connects the discharge pipe 20b to the dissolution unit 12. The introduction pipe 20b1 is provided with an introduction unit 29b that regulates the amount of the second impurity R2 introduced from the storage unit 20 into the dissolution unit 12. The introduction unit 29b is, for example, an open/close valve that supplies the second impurity R2 to the dissolution unit 12, in the open state, and stops the supply of the second impurity R2 to the dissolution unit 12, in the closed state. However, the introduction unit 29b is not limited to an open/close valve and may be any mechanism that can regulate the supply of the second impurity R2 to the dissolution unit 12. In the example in FIG. 5, the introduction unit 29b is provided at the branch section of the introduction pipe 20b1 from the discharge pipe 20b. However, the introduction unit 29b may be provided at any location. The introduction pipe 20b1 may not necessarily branch off from the discharge pipe 20b and may be directly connected to the storage unit 20 and the dissolution unit 12.

The control unit 30 introduces at least part of each of the first impurity R1 and the second impurity R2 in the storage unit 20 into the dissolution unit 12 by controlling the introduction units 29a and 29b while introducing the PET raw material Pm and the monomer D into the dissolution unit 12 to produce the dissolved solution Pd. This process increases the concentration of the first impurity R1 and the second impurity R2 in the dissolved solution Pd because the first impurity R1 and the second impurity R2 from the storage unit 20 are added to the dissolved solution Pd produced by mixing the PET raw material Pm and the monomer D. The control unit 30 introduces the dissolved solution Pd with the thus increased concentration of the first impurity R1 and the second impurity R2 into the storage unit 20 to separate the dissolved solution Pd into a layer of the first impurity R1, a layer of the PET solution P, and a layer of the second impurity R2 by gravity.

Here, the separated first impurity R1 and second impurity R2 are discharged from the discharge pipes 20a and 20b, and part of the PET solution P may also be discharged together with the first impurity R1 and the second impurity R2. If the concentration of the first impurity R1 and the second impurity R2 is low, a large amount of the PET solution P is discharged together with the first impurity R1 and the second impurity R2. In the second embodiment, however, the concentration of the first impurity R1 and the second impurity R2 is increased, so that the amount of the discharged PET solution P can be reduced, and consequently the yields of the monomers D and E can be improved. In the present embodiment, it is preferable to perform the process of separating the first impurity R1 and the second impurity R2 in the storage unit 20 and returning them to the dissolution unit 12 a predetermined number of times to ensure that sufficient amounts of first impurity R1 and the second impurity R2 are returned to the dissolution unit 12. This process can increase the concentration of the first impurity R1 and the second impurity R2 in the dissolved solution Pd appropriately.

### Effects of the Present Disclosure

As explained above, the separation system 1 according to the present disclosure includes the storage unit 20, the discharge unit 22, and the reaction unit 16. The storage unit 20 stores therein the dissolved solution Pd containing the PET solution P in which PET is dissolved in the carboxylic acid-derived monomer D and the impurity R that is a component other than PET, and separates the dissolved solution Pd into the PET solution P and the impurity R by gravity. The discharge unit 22 discharges the separated impurity R from the inside of the storage unit 20. In the reaction unit 16, the separated PET solution P and the reaction solvent M reactive with PET are introduced, and PET in the PET solution P is depolymerized.

The separation system 1 separates the dissolved solution Pd into the PET solution P and the impurity R by gravity separation. The impurity R separated by gravity is then discharged, and the PET solution P separated by gravity is used for depolymerization. This process enables proper separation of PET and the impurity R (foreign matter) without blocking the filter openings of the filter machine with the impurity R when the impurity R is separated. Since the PET solution P from which the impurity R has been removed is depolymerized, depolymerization can be performed with a high purity of PET, and the yields of the monomers D and E can also be improved.

The discharge unit 22 includes the first discharge unit 22a that discharges the first impurity R1 that is the impurity R separated into a layer below the PET solution P in the storage unit 20, and the second discharge unit 22b2 that discharges the second impurity R2 that is the impurity R separated into a layer above the PET solution. According to the present disclosure, the first impurity R1 with a heavier specific gravity than that of the PET solution P and the second impurity R2 with a lighter specific gravity are properly recovered, so that PET and the impurity R (foreign matter) can be properly separated.

The separation system 1A further includes the introduction unit 29 that introduces at least part of each of the first impurity R1 and the second impurity R2 into the dissolved solution Pd. Returning at least part of each of the first impurity R1 and the second impurity R2 to the dissolved solution Pd can increase the concentration of the first impurity R1 and the second impurity R2 and can reduce the amount of PET solution P discharged, and consequently can improve the yields of the monomers D and E.

The separation system 1 further includes the removal unit 26 that removes the third impurity R3 that is the impurity R present in the PET solution P, from the PET solution P. According to the present disclosure, removing the third impurity R3 not separated by gravity separation can increase the purity of PET in the PET solution P and consequently can improve the yields of the monomers D and E.

The separation system 1 further includes the dissolution unit 12 into which the PET raw material Pm containing PET and the carboxylic acid-derived monomer D are introduced to produce the dissolved solution Pd. The storage unit 20 is connected to the dissolution unit 12 so that the dissolved solution Pd is introduced from the dissolution unit 12. According to the present disclosure, PET and the impurity R (foreign matter) can be properly separated.

The reaction solvent M is methanol, and the carboxylic acid-derived monomer D is dimethyl terephthalate. According to the present disclosure, dissolving PET with dimethyl terephthalate increases the fluidity of PET and facilitates introduction of PET into the reaction unit 16. Furthermore, PET can be properly depolymerized by reacting PET with methanol.

A separation method according to the present disclosure includes the steps of: separating the dissolved solution Pd containing the PET solution P in which PET is dissolved in the carboxylic acid-derived monomer D and the impurity R that is a component other than PET, into the PET solution P and the impurity R by gravity; discharging the separated impurity R; and reacting the separated PET solution P with the reaction solvent M reactive with the PET to depolymerize the PET in the PET solution P. According to this method, PET and the impurity R (foreign matter) can be properly separated.

Although the embodiments of the present invention have been described above, the embodiments are not intended to be limited by the contents of the embodiments. The aforementioned components also include those that can be readily conceived by those skilled in the art, those that are substantially identical, and those in the range of equivalence. Furthermore, the aforementioned components can be combined as appropriate. Furthermore, various omissions, substitutions, or modifications of the components can be made without departing from the spirit of the aforementioned embodiments.

### Reference Signs List

- 12: Dissolution unit
- 14: Solvent storage unit
- 16: Reaction unit
- 18: Separation unit
- 20: Storage unit
- 22: Discharge unit
- 30: Control unit
- D, E: Monomer
- M: Reaction solvent
- P: PET solution
- Pd: Dissolved solution
- Pm: PET raw material
- R: Impurities
- R1: First impurity
- R2: Second impurity
- R3: Third impurity

## Claims

1. A separation system comprising:
a storage unit configured to store therein a dissolved solution containing a PET solution in which polyethylene terephthalate is dissolved in a carboxylic acid-derived monomer and an impurity that is a component other than the polyethylene terephthalate, and separate the dissolved solution into the PET solution and the impurity by gravity;
a discharge unit configured to discharge the separated impurity from an inside of the storage unit; and
a reaction unit into which the separated PET solution and a reaction solvent reactive with polyethylene terephthalate are introduced and in which polyethylene terephthalate in the PET solution is depolymerized.

2. The separation system according to claim 1, wherein the discharge unit includes a first discharge unit configured to discharge a first impurity that is the impurity separated into a layer below the PET solution in the storage unit, and a second discharge unit configured to discharge a second impurity that is the impurity separated into a layer above the PET solution.

3. The separation system according to claim 2, further comprising an introduction unit configured to introduce at least part of each of the first impurity and the second impurity into the dissolved solution.

4. The separation system according to claim 2 or 3, further comprising a removal unit configured to remove a third impurity that is the impurity present in the PET solution, from the PET solution.

5. The separation system according to any one of claims 1 to 4, further comprising a dissolution unit into which a PET raw material containing polyethylene terephthalate and a carboxylic acid-derived monomer are introduced to produce the dissolved solution, wherein
the storage unit is connected to the dissolution unit so that the dissolved solution is introduced into the storage unit from the dissolution unit.

6. The separation system according to any one of claims 1 to 5, wherein the reaction solvent is methanol, and the carboxylic acid-derived monomer is dimethyl terephthalate.

7. A separation method comprising the steps of:
separating a dissolved solution containing a PET solution in which polyethylene terephthalate is dissolved in a carboxylic acid-derived monomer and an impurity that is a component other than the polyethylene terephthalate, into the PET solution and the impurity by gravity;
discharging the separated impurity; and
reacting the separated PET solution with a reaction solvent reactive with polyethylene terephthalate to depolymerize polyethylene terephthalate in the PET solution.
